# EUROPÄISCHE PATENTANMELDUNG

(11) **EP 3 552 477 A1**
(43) Veröffentlichungstag der Anmeldung: **16.10.2019**
(21) Anmeldenummer: 19167285.6
(22) Anmeldetag: 04.04.2019
(51) Int. Cl.: A01D 84/00, A01D 78/02

(54) **HEUSCHWADER MIT OSZILLIERENDEM LEITBLECH**

(30) Priorität: 09.04.2018 DE 202018101897 U
(71) Anmelder: Agrartechnik Seeber GmbH, 39031 Stegen/Bruneck (IT)
(72) Erfinder: SEEBER, Daniel, 39030 St. Sigmund / Kiens (IT); SEEBER, Gottfried, 39031 St. Georgen / Bruneck (IT); UNTERPERTINGER, Walter, 39030 Terenten (IT)
(74) Vertreter: Becker Kurig Straus

(57) **Zusammenfassung**

Die vorliegende Erfindung betrifft einen Heuschwader (2), beispielsweise einen Pickup-Schwader mit oszillierendem Leitblech (6) als Anbaugerät oder eigenständige landwirtschaftliche Maschine, vorzugsweise für einen Einsatz an einem Hang.

## Beschreibung

### 1. Technisches Gebiet

Die vorliegende Erfindung betrifft einen Heuschwader, beispielsweise einen Pickup-Schwader mit oszillierendem Leitblech als Anbaugerät oder eigenständige landwirtschaftliche Maschine. In einer speziellen Ausführung betrifft die vorliegende Erfindung einen einachsigen handgeführten Pickup-Schwader für einen Einsatz an einem Hang.

### 2. Beschreibung des Standes der Technik

Heuschwader sind in der Landwirtschaft seit längerem bekannt. Die Landwirtschaft kennt bereits Heuschieber, Kreiselschwader, Sternschwader, Rotorschwader, Pickup-Schwader, Kammschwader sowie Bandrechschwader.

Es ist wünschenswert einen Heuschwader, insbesondere einen Pickup-Schwader, gegenüber dem bekannten Stand der Technik weiter zu verbessern.

### 3. Kurze Beschreibung der Erfindung

Die vorliegende Erfindung stellt solch einen verbesserten Heuschwader mit den Merkmalen des Schutzanspruchs 1 bereit, wobei bevorzugte Ausführungen in den abhängigen Ansprüchen beschrieben sind.

Der erfindungsgemäße Heuschwader, umfasst eine Aufnahmeeinrichtung, die dazu eingerichtet ist Heu von einem Boden aufzunehmen und dieses auf ein Leitblech zu befördern, wobei das Leitblech durch eine Rüttelvorrichtung in eine oszillierende bzw. rüttelnde/vibrierende Bewegung versetzt werden kann. Der Begriff "Blech" in Leitblech ist im Zusammenhang der vorliegenden Erfindung breit auszulegen und sollte nicht als Einschränkung möglicher Materialien des Leitbelchs interpretiert werden. Neben leichten Metallen, wie Aluminium, sind auch Kunststoffe (z.B. PVC) oder Verbundwerkstoffe (z.B. GFK oder Kohlefaserverstärkte Kunststoffe) als Materialien für das Leitblech geeignet. Die Rüttelvorrichtung ist bevorzugt durch eine Zapfwelle eines Antriebs einer landwirtschaftlichen Maschine, durch einen Abgriff an einem Antrieb der Aufnahmeeinrichtung oder durch einen eigenen Antriebsmotor angetrieben. Das von der Aufnahmeeinrichtung Pickup-Vorrichtung aufgenommene Heu wird dabei auf das Leitblech befördert. Das aufgenommene Heu sammelt sich dadurch auf dem Leitblech und wird entweder durch nachfolgendes Heu, durch die Schwerkraft oder die Rüttelbewegung selbst zu einer Seite des Heuschwaders bewegt, und seitlich neben dem Heuschwader in einer Schwade abgelegt. Die vorliegende Erfindung nutzt dabei mindestens den Effekt, dass eine Gleitreibung geringer ist als eine Haftreibung. Durch die Rüttelbewegung bewegt sich das Heu permanent auf dem Leitblech, was dazu führt, dass im Wesentlichen nur eine verminderte Gleitreibung zwischen Heu und Leitblech auftritt. Durch die verringerte Reibung kann es bereits ausreichen, dass nachfolgend durch die Aufnahmeeinrichtung, bevorzugt einen Pickup, gefördertes Heu eine hinreichend große Kraft auf das Heu auf dem Leitblech ausübt, dass dieses seitlich von dem Leitblech rutscht.

In einer bevorzugten Ausführungsform des Heuschwaders kann das Leitblech durch die Rüttelvorrichtung in eine eindimensionale Oszillation bzw. Bewegung versetzt werden. Bei einer beispielsweise geradlinigen Oszillation eines waagerechten Leitblechs wird lediglich die Reibung zwischen dem aufgenommenen Heu und dem Leitblech deutlich verringert. Wird jedoch ein solcher Schwader an einem Hang eingesetzt, sodass das Leitblech im Wesentlichen die gleiche Neigung aufweist wie der Hang, kann das Heu einfach durch einen entsprechenden Teil der Schwerkraft seitlich zur hangabwärts liegenden Seite rutschen, und neben dem Schader eine Schwade bilden. Bevorzugt werden solche Schwader durch eine hinter dem Schwader gehende Person geführt, und können daher auch als "Geh-Schwader" bezeichnet werden. Durch den Transport durch die Schwerkraft, kann ein gesamter Hang von oben nach unten in parallelen Streifen abgefahren werden, sodass sich am Ende das gesamte Heu am Fuße des Hangs befindet. Bei dieser Ausführung kann ein beispielsweise waagerechtes Leitblech verwendet werden das eine seitliche, eine Vor- und Zurück- oder auch eine Auf- und Ab-Bewegung ausführt. Das Blech kann auch eine schräge Bewegung ausführen, wie beispielsweise von links unten nach rechts oben gesehen in Längs- bzw. Fahrtrichtung. Es ist ebenfalls möglich beispielsweise ein gekrümmtes oder zylindrisches Leitblech einzusetzen, das eine eindimensionale Bewegung entlang einer Kreislinie ausführt.

Bei einer weiteren Ausführungsform des Heuschwaders kann das Leitblech durch die Rüttelvorrichtung in eine zweidimensionale Oszillation bzw. Bewegung versetzt werden. Diese Ausführung kann es gestatten durch die Rüttelbewegung ein auf dem Leitblech befindliches Heu gezielt nach Art eines Schwingförderers oder Vibrationsförderers bevorzugt in eine Richtung nach links oder rechts vom Schwader zu transportieren. Es ist möglich eine oder zwei Rüttelvorrichtungen einzusetzen, die jeweils das Heu in eine bevorzugte Richtung fördern, es ist jedoch ebenfalls möglich eine einzelne Rüttelvorrichtung einzusetzen, die umgesteuert werden kann.

Eine zusätzliche Ausführungsform des Heuschwaders weist eine Rüttelvorrichtung auf, die das Leitblech in eine dreidimensionale Oszillation versetzt werden kann. Damit kann beispielsweise bei einem gekrümmten Leitblech eine Bewegung erzeugt werden, sodass das aufgenommene Heu in einer Schneckenbewegung einerseits zusammengerollt und andererseits zu einer Seite des Schwaders gefördert wird. Dabei kann ein gekrümmtes Leitblech einerseits eine Auf- und Ab-Bewegung ausführen, um die Reibung zwischen Heu und Leitbleich zu verringern, und andererseits eine Vor- und Zurückbewegung ausführen. Die beiden Bewegungen können gegeneinander phasenverschoben sein, wodurch aufgenommenes Heu zu einer Rolle zusammenwickelt wird. Dazu kann eine weitere (optional umsteuerbare) Oszillationsbewegung überlagert werden, mit der das Heu nach links oder rechts neben den Schwader gefördert wird.

In einer zusätzlichen Ausführungsform des Heuschwaders kann das Leitblech um mindestens eine Längsachse und/oder um mindestens eine Hochachse, jeweils bezüglich der Aufnahme- bzw. Pickup-Einrichtung, geneigt werden. Damit kann das Leitblech den durch den Pickup bzw. durch die Aufnahmeeinrichtung aufgenommenen Heustrom wie ein Schneepflug zu der linken oder der rechten Seite des Heuschwaders leiten. Dieses ist insbesondere möglich, da der Reibungswiderstand zwischen dem Leitblech und dem Heustrom durch die Rüttelbewegung des Leitblechs deutlich herabgesetzt ist. Das Leitblech kann auch nach links oder rechts abgesenkt werden, um so eine schiefe Ebene zu bilden, entlang der das aufgenommene Heu zu der linken oder der rechten Seite des Heuschwaders abgleiten kann. Dabei wirkt das Leitblech wie eine Rutsche auf der das Heu abrutschen kann.

Bei einer zusätzlichen Ausführungsform des Heuschwaders umfasst dieser weiter einen Masseausgleich, um die Rüttelbewegung von den Händen und Armen des Maschinenführers fernzuhalten. Bei einer anderen zusätzlichen Ausführung wird der Masseausgleich durch ein Leitblech erreicht, das mindestens zwei Teil-Leitbleche umfasst, die eine entgegengesetzte oder sich ergänzende Rüttelbewegung ausführen. Dabei kann relativ einfach eine sehr starke masseausgeglichene Schwing- bzw. Rüttelbewegung erzeugt werden, die eine Bedienung des Heuschwaders deutlich vereinfacht.

Bei einer weiteren Ausführung des Heuschwaders umfasst die Rüttelvorrichtung mindestens einen Exzenter und/oder mindestens eine Kurbel und/oder mindestens einen Nockenantrieb. Der Exzenter und/oder die mindestens eine Kurbel und/oder der mindestens eine Nockenantrieb kann bzw. können dabei an eine Antriebswelle oder einen Antrieb angeschlossen werden, um das Leitblech in eine Rüttelbewegung zu versetzen.

Bei einer anderen Ausführung des Heuschwaders kann die Rüttelvorrichtung durch eine Kupplung oder alternativ durch ein Wendegetriebe mit dem mindestens einen Exzenter und/oder die mindestens eine Kurbel und/oder dem mindestens einen Nockenantrieb verbunden werden. Damit kann die Rüttelfunktion des Leitblechs ein oder ausgeschaltet werden. Dies ist beispielsweise bei einem Transport hilfreich um den Heuschwader einfacher und leiser bewegen zu können. Weiterhin kann die Rüttelvorrichtung auch an besonders steilen Hängen ausgeschaltet werden, wenn das aufgenommene Heu von selber zu einer hangabwärts liegenden Seite des Schwaders bzw. des Leitblechs rutscht.

Bei einer zusätzlichen Ausführungsform des Heuschwaders umfasst die Rüttelvorrichtung weiter eine Getriebe, mit dem eine Bewegung des mindestens einen Exzenters und/oder der mindestens eine Kurbel und/oder des mindestens einen Nockenantrieb auf das Leitblech übertragen werden kann. Das Getriebe kann dabei als Stangen- oder Stabgetriebe ausgeführt sein, das die Bewegung des Exzenters / der Kurbel / des Nockens auf das oder die Leitbleche überträgt.

Eine weitere Ausführung des Heuschwaders verwendet Linearführungen, um das oder die Leitbleche gegenüber dem Heuschwader zu führen. Linearführungen ermöglichen einfache Linearbewegungen. Eine andere Ausführung des Heuschwaders verwendet Gestängeführungen, um das Leitblech oder die Leitbleche gegenüber dem Heuschwader zu führen. Gestängeführungen ermöglichen es auf eine einfache Weise eine Bewegung des Leitblechs auf einer Kreisbahn zu verwirklichen. Gestängeführungen mit zwei Gestängen ermöglichen es insbesondere einen Rüttelförderer umzusetzen, der aufgenommenes Heu gezielt zu einer linken oder rechten Seite fördert.

Bei einer anderen Ausführungsform des Heuschwaders ist dieser als ein Vorsatzgerät für ein einachsiges Landwirtschaftsgerät, einen Motormäher, einen Einachstraktor oder Mehrachstraktor ausgelegt.

In einer anderen Ausführungsform ist der Heuschwader fest an einem einachsigen Landwirtschaftsgerät, einen Motormäher, einen Einachstraktor oder einen Mehrachstraktor angebracht. Hier stellt das einachsige Landwirtschaftsgerät, der Motormäher, der Einachstraktor oder der Mehrachstraktor den Heuschwader dar.

In einer anderen Ausführungsform ist der Heuschwader als selbstständig funktionstüchtiges Gerät mit eigenem Antrieb ausgeführt ist.

In einer weiteren Ausführungsform umfasst der Heuschwader weiterhin ein Führungsblech, das sich unterhalb des Leitblechs befindet und im Wesentlichen entsprechend dem Leitblech gestaltet und parallel zu diesem angeordnet ist, wobei das Führungsblech eine Öffnung aufweist, durch welche eine Kupplung zwischen Rüttelvorrichtung und Leitblech hindurchreicht. Das Führungsblech schützt die Mechanik der Rüttelvorrichtung, des Fahrgestells, und der Aufnahmeeinrichtung zusätzlich zu dem Leitblech vor Verunreinigungen. Während das Leitblech schwingend oder schwenkbar an dem Heuschwader gelagert ist, ist das Führungsblech bevorzugt positionsfest an dem Heuschwader befestigt, z.B. an einem Rahmen des Heuschwaders oder dessen Fahrgestell.

In einer weiteren Ausführungsform ist das Leitblech aus einem relativ leichten Material, bevorzugt Kunststoff oder einem Verbundwerkstoff, gefertigt und/oder das Führungsblech aus einem relativ schweren Material, bevorzugt einem Metall oder einer Metalllegierung, z.B. Aluminium oder Edelstahl, gefertigt. Das relativ leichte Leitblech ist durch das geringere Gewicht leichter in Schwingung bzw. eine Rüttelbewegung oder Oszillation zu versetzen. Zudem sind leichte Materialien oft kostengünstiger und einfacher auszutauschen, so dass Wartungen an dem einem erhöhten Verschleiß ausgesetzten Leitblech vereinfacht werden. In einer alternativen Ausführungsform der Erfindung können Leitblech und Führungsblech auch aus dem gleichen Material gefertigt sein.

### 4. Kurze Beschreibung der Figuren

Im Folgenden wird die vorliegende Erfindung anhand von schematischen nichtmaßstabgerechten Darstellungen veranschaulicht.
Figuren 1A bis 1D zeigen schematische Ansichten eines Pickup-Heuschwaders.
Figuren 2A bis 2F zeigen verschiedene erfindungsgemäße Ausführungen von möglichen Rüttelbewegungen des Leitblechs.
Figuren 3A und 3B zeigen erfindungsgemäße Ausführungen von Heuschwadern mit einem schwenk- bzw. neigbaren Leitblech.
Figur 4 ist eine schematische Querschnittsansicht einer Rüttelvorrichtung 60 gemäß einer bevorzugten Ausführungsform der vorliegenden Erfindung.

### 5. Ausführliche Beschreibung der Ausführungsformen

Im Folgenden werden sowohl in der Beschreibung als auch in den Figuren gleiche oder ähnliche Bezugszeichen verwendet um auf gleiche oder ähnliche Komponenten oder Elemente Bezug zu nehmen.

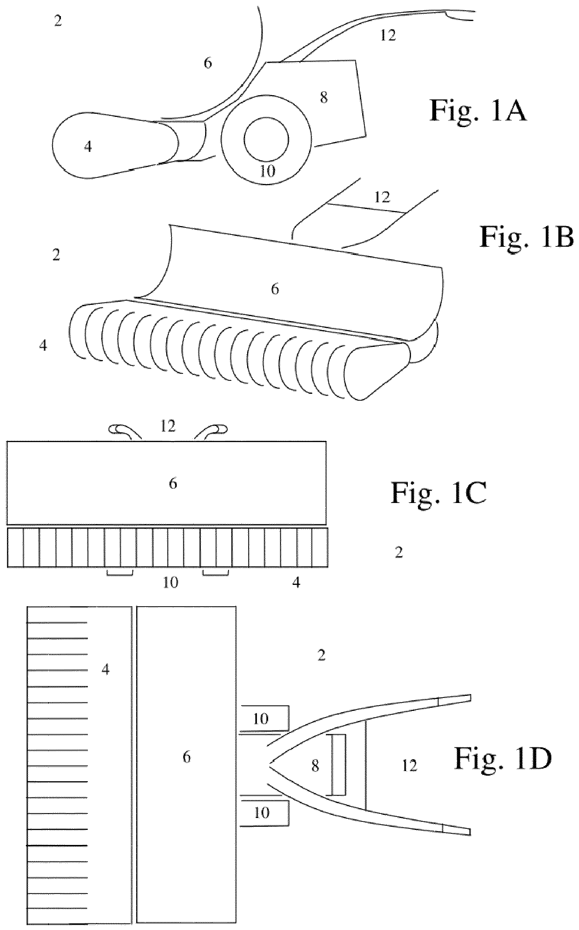

Figur 1A zeigt eine Seitenansicht eines handgeführten, einachsigen landwirtschaftlichen Geräts, das als Heuschwader 2 ausgeführt ist. Auch wenn die entsprechenden Merkmale in Fig. 1A nicht dargestellt sind, kann ein Leitblech 6 des Heuschwaders 2 der Fig. 1A gemäß der Erfindung in Oszillation bzw. eine Vibrations- oder Rüttelbewegung versetzt werden. Der Heuschwader 2 umfasst an einem vorderen Ende eine Aufnahmeeinrichtung, die in der vorliegenden bevorzugten Ausführungsform als ein Pickup ausgeführt ist, mit dem/der der Heuschwader auf einem Boden liegendes Heu aufnimmt, und nach oben hinten transportiert, wo es auf das Leitblech 6 trifft. Der Heuschwader ist dabei dazu ausgelegt, das Leitblech in eine Rüttelbewegung zu versetzen. Der Heuschwader 2 verfügt hier weiter über einen Antrieb 8 wie ein Benzin- oder Elektromotor, der die Räder 10, den Pickup 4 und das Leitblech zu einer Rüttelbewegung antreibt. Die dargestellte Ausführung eines erfindungsgemäßen Heuschwaders 2 kann über die Führ- oder Lenkholme 10 und (nicht dargestellte Bedienelemente) gesteuert werden. Die Art des Pickups 4 ist dabei für die vorliegende Erfindung nicht wichtig. Es können zusätzlich Führungsräder oder Kufen vorgesehen sein, die eine bestimmte Höhe des Pickups über dem Boden sicherstellen. Die Zinken des Pickup sind zur Klarheit nicht dargestellt. Auch sind alternative Ausführungsformen ohne Pickup-Walze im Sinne der vorliegenden Erfindung ausführbar. Z.B. kann auch ein motorgetriebener Heuschieber mit einem oszillierenden bzw. vibrierenden Leitblech gemäß der Erfindung ausgestattet sein.

Figur 1B zeigt eine schematische perspektivische Ansicht des Heuschwaders von Figur 1A.

Figur 1C zeigt eine schematische Frontalansicht des Heuschwaders von Figur 1A.

Figur 1D zeigt eine schematische Ansicht von oben auf den Heuschwader von Figur 1A.

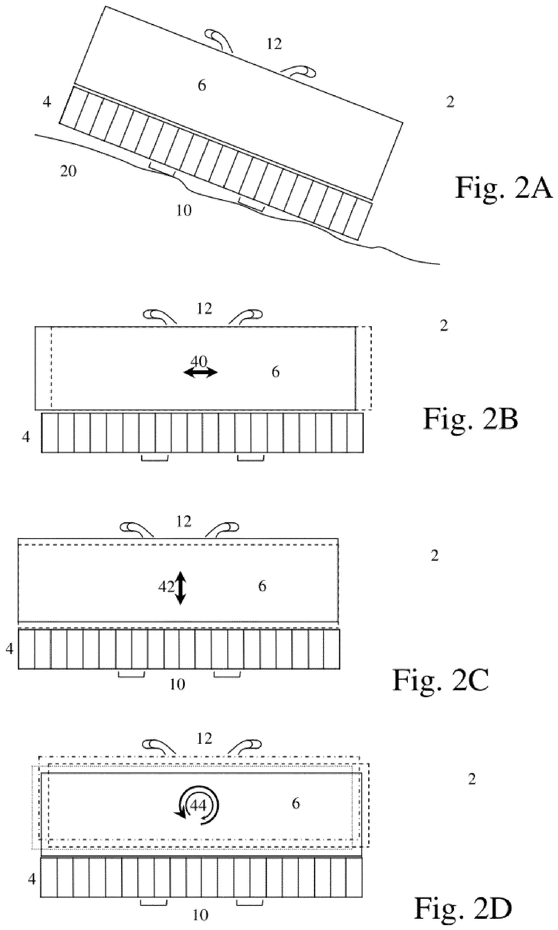

Figur 2A zeigt den Heuschwader von Figur 1D in einem typischen Anwendungsfall, bei dem der Heuschwader 2 parallel zu einem Hang geführt wird und aufgenommenes Heu durch die Seitenneigung des Heuschwaders 2 von dem Leitblech 6 nach rechts abrutscht und links neben dem Heuschwader eine Heuschwade bildet. Bei derart steilen Hängen kann eventuell darauf verzichtet werden das Leitblech 6 in eine Rüttelbewegung zu versetzen. Bei flacheren Hängen kann durch die Rüttelbewegung die Reibung zwischen dem aufgenommenen Heu und dem Leitblech 6 verringert werden, wodurch verhindert werden kann, dass sich das Heu auf dem Leitblech ansammelt.

Figur 2B zeigt einen Heuschwader 2, dessen Leitblech 6 in eine horizontale Rüttelbewegung 40 versetzt werden kann. Diese Ausführung eignet sich besonders für Hänge, deren Neigung für den Einsatz eines nicht zur Schwingung/Oszillation angetriebenen Leitblechs zu gering ist.

Figur 2C zeigt einen Heuschwader 2, dessen Leitblech 6 in eine vertikale Rüttelbewegung 40 versetzt werden kann. Die Richtung der Rüttelbewegung ist dabei nicht ausschlaggebend, da durch die Bewegung hauptsächlich erreicht wird, dass anstelle einer Haftreibung zwischen Heu und Blech eine geringere Gleitreibung vorliegt. Die geringere Gleitreibung ermöglicht hier ein einseitiges Abrutschen von Heu auch bei weniger stark geneigten Hängen.

Figur 2D zeigt eine Variante des Heuschwaders 2, bei dem das Leitblech 6 in eine kreisförmige Rüttelbewegung 44 in oder gegen den Uhrzeigersinn bewegt werden kann. Dies ist beispielsweise mit einem Ketten- oder Kardanantrieb, der auf Kurbeln oder Exzenter wirkt, einfach umzusetzen. Durch ein zusätzliches Wendegetriebe zwischen einem Antrieb und den Kurbeln bzw. Exzentern lässt sich die Drehrichtung der Bewegung des Leitblechs einfach umkehren. Durch die Drehbewegung wird aus einer einfachen Rüttelvorrichtung ein Rüttelförderer. Wird das Leitblech, wie dargestellt, entgegen dem Uhrzeigersinn bewegt, wird Heu welches auf dem Leitblech zu liegen kommt aktiv nach recht befördert, sodass sich im Betrieb eine Heuschwade in Fahrtrichtung links neben dem Heuschwader 2 bildet.

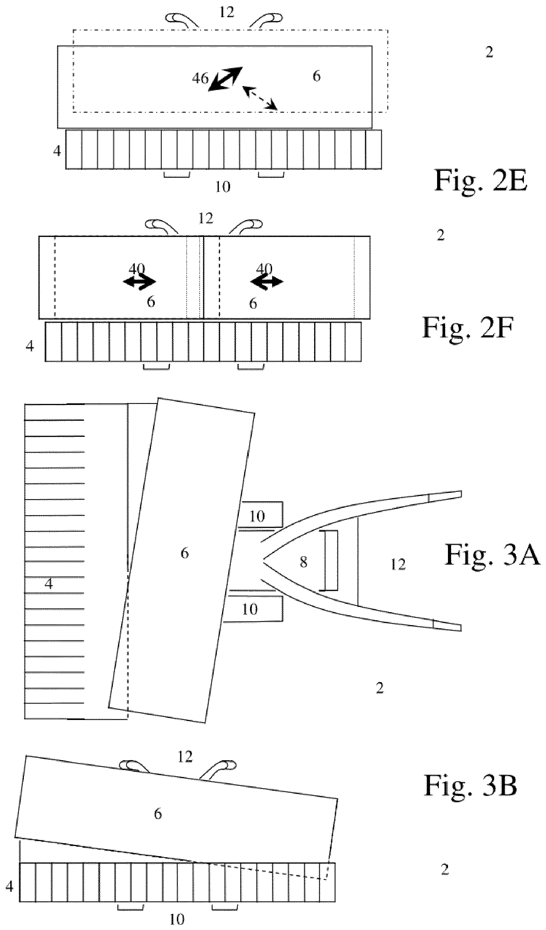

Figur 2E zeigt eine Variante des Heuschwaders 2, bei dem das Leitblech 6 in eine schräge Rüttelbewegung 46 von links unten nach rechts oben (oder entgegengesetzt von links unten nach rechts oben) angetrieben werden kann. Dies ist beispielsweise mit einem Schubstangenantrieb, zusammen mit Linearführungen oder besser mit einer Kurbelschwinge und Kurbelführungen umsetzen. Durch ein zusätzliches Wendegetriebe oder einer Verlängerung der Kurbel lässt sich die Richtung der Rüttelbewegung des Leitblechs 6 einfach umkehren. Die schräge Rüttelbewegung 46 wirkt dabei als Rüttelförderer. Wird das Leitblech, wie dargestellt, von links unten nach rechts oben bewegt, wird Heu, welches auf dem Leitblech 6 zu liegen kommt, aktiv nach rechts befördert, sodass sich auch bei einem Betrieb im Flachland eine Heuschwade in Fahrtrichtung links neben dem Heuschwader 2 bildet.

Figur 2F zeigt eine Ausführung mit einem sich horizontal bewegenden geteilten Leitblech 6, dessen Teile sich entgegengesetzt bewegen. Durch die entgegengesetzte Bewegung wird ein Masseausgleich geschaffen, der Vibrationen vermeidet.

Figur 3A zeigt eine Ausführung eines Heuschwaders 2 mit schwenkbarem Leitblech 6. Auch hier wird das Leitblech 6 zu einer Rüttelbewegung angetrieben. Durch die Verschwenkung des Leitblechs 6 kann ein aufgenommener Heustrom in Fahrtrichtung nach rechts abgeleitet werden. Das zugrundeliegende Prinzip entspricht dabei dem eines Schneepflugs.

Figur 3B zeigt eine Ausführung eines Heuschwader mit einem neigbaren Leitblech in einer Frontalansicht. Um den Heuschwader 2 auch in flacherem Gelände einsetzen zu können, kann das Leitblech 6 um eine Längsachse des Heuschwaders 2 geneigt werden. Durch die Rüttelbewegung und die Neigung des Leitblechs 6 kann ein aufgenommener Heustrom in Fahrtrichtung nach links abgeleitet werden. Das zugrundeliegende Prinzip entspricht dabei dem einer schiefen Ebene. Das Prinzip funktioniert hier auch bei geringen Neigungen da, beispielsweise eine vertikale oder auch horizontale Rüttelbewegung bei einer schiefen Ebene zusammen mit der Schwerkraft bereits als Rüttelförderer wirkt.

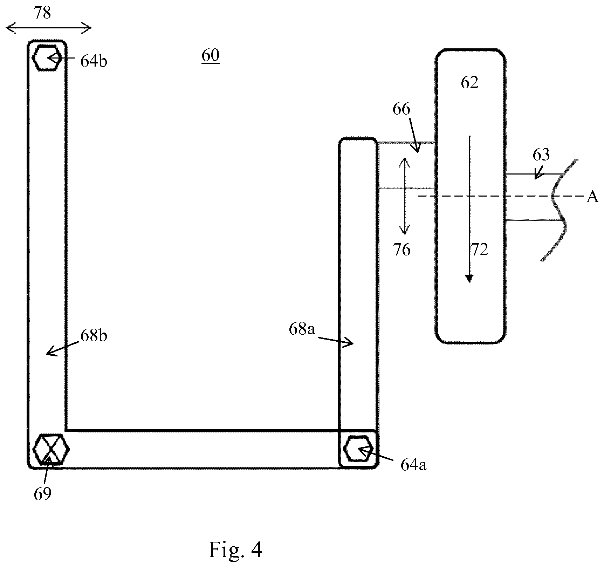

Figur 4 ist eine schematische Querschnittsansicht einer Rüttelvorrichtung gemäß einer bevorzugten Ausführungsform der vorliegenden Erfindung. Mit Bezug auf Figur 4 umfasst eine Rüttelvorrichtung 60 eine Exzenterscheibe 62, die mittels einer Antriebskopplung 63 mit einem Antrieb (nicht gezeigt) verbunden ist und im Betrieb durch diesen zur Rotation (Pfeil 72) angetrieben wird. Die Drehachse A der Exzenterscheibe 62 ist in der vorliegenden Ausführungsform parallel zu einer Drehachse einer Pickup-Walze (nicht dargestellt) des Heuschwaders. An Exzenterscheibe 62 ist von deren Drehachse A beabstandet eine Exzenterkopplung 66 befestigt, an der wiederum ein Ende eines ersten, länglich ausgebildeten Verbindungselement 68a schwenkbar befestigt ist. Das erste Verbindungselement 68a ist mit dessen anderem, gegenüberliegenden Ende beispielsweise mittels einer Niet- oder Bolzenverbindung 64a mit einem Ende eines zweiten, gewinkeltes Verbindungselements 68b verbunden. Um Scherbelastungen durch die übertragene Drehbewegung der Exzenterscheibe 62 zu reduzieren, können dem Fachmann geläufige Mittel vorgesehen werden, z.B. eine zusätzliches Kugelgelenk (nicht dargestellt).

In Figur 4 ist das zweite Verbindungselements 68b L-förmig dargestellt, worauf die Erfindung jedoch nicht beschränkt ist. Ein Verbindungselement mit anderem Winkel oder ein im Wesentlichen gekrümmtes Verbindungselement ist äquivalent einsetzbar. Das zweite Verbindungselement 68b ist an oder nahe an dessen Knickpunkt mittels einer weiteren Niet- oder Bolzenverbindung 69 schwenkbar aber positionsfest befestigt, bevorzugt an einem Rahmen des Heuschwaders 2 oder dessen Fahrgestell (jeweils nicht dargestellt). Die Niet- oder Bolzenverbindung 69 bildet somit einen Angelpunkt für das schwenkbare zweite Verbindungselement 68b. Das andere Ende des zweiten Verbindungselements 68b ist in der dargestellten Ausführungsform wiederrum mit einer Niet- oder Bolzenverbindung 64b an einem Schwingungsübertragungselement (nicht dargestellt) oder direkt mit dem Leitblech (nicht dargestellt) verbunden. Ein zusätzliches, mit einem Ende schwenkbar an Niet- oder Bolzenverbindung 64b und mit einem anderen Ende schwenkbar am Leitblech angebrachtes Schwingungsübertragungselement kann verbleibende Auf/Ab-Komponenten der Bewegung des anderen Endes des zweiten Verbindungselements 68b aufnehmen, so dass nur die reine Rechts-Links-Bewegung an das Leitblech 6 übertragen werden. In anderen Ausführungsformen sind solche vertikalen Komponenten des zweiten Verbindungselements 68b je nach Schwingungsamplitude vernachlässigbar klein.

Die zweidimensionale Drehbewegung der Exzenterscheibe 62 wird durch die zwischen Exzenterkopplung 66 und Niet- oder Bolzenverbindung 69 wirkenden Kräfte zunächst in eine Auf-Ab-Bewegung (Pfeil 76) des ersten Verbindungselements 68a, d.h. eine Schwingung parallel zur Exzenterscheibe 62, und weiter in eine Rechts-Links-Bewegung (Pfeil 78) des anderen Endes des zweiten Verbindungselements 68b, d.h. eine Schwingung senkrecht zur Exzenterscheibe 62, umgewandelt. Dadurch wird das Leitblech des Heuschwaders (nicht dargestellt) zu einer Rechts-Links-Rüttelbewegung bzw. Vibration parallel zur Achse A der Exzenterscheibe angeregt.

Der Fachmann kann aus Figur 4 genug Informationen und Anregungen entnehmen, um auch die anderen erfindungsgemäßen Schwingungen oder Oszillationen des Leiblechs mit einer ähnlichen Anordnung zu erreichen. Zur Anregung einer kreisförmigen Oszillation des Leitblechs kann die Exzenterkopplung auch direkt an dem Leitblech befestigt werden, wobei eine entsprechende Umlenkung der Drehung einer Antriebswelle erforderlich ist. Eine Auf-Ab-Bewegung des Leitblechs kann beispielsweise durch direkte Kopplung von Leitblech und ersten Verbindungselement aus Figur 4 erreicht werden.

Zudem sollte Verstanden werden, dass neben der in Figur 4 mechanisch übertragenen Schwingung auch eine hydraulische oder pneumatische Übertragung der Schwingung/Oszillation möglich ist. Der hydraulische/pneumatische Druck kann dabei direkt von einem Hydraulik- bzw. Pneumatik-Motor stammen oder an einer externen Antriebswelle oder einer Antriebswelle des Pickups mittels Exzenter abgegriffen werden.

Es sollen auch alle Kombinationen von Ausführungen als offenbart angesehen werden.

### Bezugszeichen

- 2: Heuschwader
- 4: Pickup / Aufnahmeeinrichtung
- 6: Leitblech
- 8: Motor / Antrieb
- 10: Reifen / Bereifung
- 12: Führholme
- 20: Hang
- 40: Rüttelbewegung seitlich / horizontal
- 42: Rüttelbewegung vertikal / vor- und zurück
- 44: schräge Rüttelbewegung
- 46: kreisförmige Rüttelbewegung
- 60: Rüttelvorrichtung
- 62: Exzenterscheibe
- 63: Antriebskopplung
- 64a/b: Niet- oder Bolzenverbindung
- 66: Exzenterkopplung
- 68a: erstes Verbindungselement
- 68b: zweites Verbindungselement
- 69: positionsfeste Niet- oder Bolzenverbindung
- 72: Drehung der Exzenterscheibe
- 76: Auf-Ab-Bewegung
- 78: Rechts-Links-Bewegung

## Patentansprüche

1. Heuschwader (2), umfassend:
eine Aufnahmeeinrichtung (4), die dazu eingerichtet ist Heu von einem Boden aufzunehmen und dieses auf ein Leitblech (6) zu befördern,
**dadurch gekennzeichnet, dass**
das Leitblech (6) durch eine Rüttelvorrichtung in eine oszillierende, rüttelnde, und/oder vibrierende Bewegung versetzt werden kann.

2. Heuschwader (2) nach Anspruch 1, wobei die Aufnahmeeinrichtung (4) eine Pickup-Walze umfasst.

3. Heuschwader (2), nach Anspruch 1 oder 2, wobei
das Leitblech (6) durch die Rüttelvorrichtung in eine Rüttelbewegung oder eine Oszillation versetzt werden kann und wobei
die Rüttelbewegung oder Oszillation des Leitblechs (6) eine eindimensionale Rüttelbewegung oder Oszillation, eine zweidimensionale Rüttelbewegung oder Oszillation oder eine dreidimensionale Rüttelbewegung oder Oszillation ist.

4. Heuschwader (2), nach einem der Ansprüche 1-3, wobei das Leitblech (6) um mindestens eine Längsachse und/oder um mindestens eine Hochachse, bezüglich der Aufnahmeeinrichtung (4), geneigt werden kann.

5. Heuschwader (2), nach einem der vorstehenden Ansprüche,
wobei der Heuschwader weiterhin einen Masseausgleich umfasst, und/oder wobei das Leitblech (6) mindestens zwei Teil-Leitbleche umfasst, die eine entgegengesetzte Rüttelbewegung, bevorzugt eine entgegengesetzte Oszillation ausführen.

6. Heuschwader (2), nach einem der vorstehenden Ansprüche,
wobei die Rüttelvorrichtung mindestens einen Exzenter und/oder mindestens eine Kurbel und/oder mindestens einen Nockenantrieb umfasst, die dazu bestimmt ist an eine Antriebswelle oder einen Antrieb angeschlossen zu werden oder an eine Antriebswelle oder einen Antrieb angeschlossen ist.

7. Heuschwader (2), nach Anspruch 5,
wobei die Rüttelvorrichtung durch eine Kupplung mit dem mindestens einen Exzenter und/oder der mindestens eine Kurbel und/oder dem mindestens einen Nockenantrieb mit einer Antriebswelle oder einem Antrieb verbunden werden kann.

8. Heuschwader (2), nach Anspruch 5 oder 6,
wobei die Rüttelvorrichtung durch ein Wendegetriebe mit dem mindestens einen Exzenter und/oder der mindestens eine Kurbel und/oder dem mindestens einen Nockenantrieb mit einer Antriebswelle oder einen Antrieb verbunden werden kann.

9. Heuschwader (2), nach einem der Ansprüche 6-8,
wobei die Rüttelvorrichtung weiter ein Getriebe umfasst, mit dem eine Bewegung des mindestens einen Exzenters und/oder der mindestens einen Kurbel und/oder des mindestens einen Nockenantriebs auf das Leitblech (2) übertragen werden kann.

10. Heuschwader (2), nach einem der vorstehenden Ansprüche, wobei das Leitblech (6) durch Linearführungen oder über ein Gestänge gegenüber dem Heuschwader (2) geführt ist.

11. Heuschwader (2), nach einem der vorstehenden Ansprüche, wobei der Heuschwader (2) als Vorsatzgerät für ein einachsiges Landwirtschaftsgerät, einen Motormäher, einen Einachstraktor oder einen Mehrachstraktor ausgeführt ist.

12. Heuschwader (2), nach einem der vorstehenden Ansprüche, wobei der Heuschwader angepasst ist, um fest an einem einachsigen Landwirtschaftsgerät, einem Motormäher, einem Einachstraktor oder einem Mehrachstraktor angebracht zu werden.

13. Heuschwader (2), nach einem der vorstehenden Ansprüche, wobei der Heuschwader (2) als selbstständig funktionstüchtiges Gerät mit eigenem Antrieb ausgeführt ist.

14. Heuschwader (2), nach einem der vorstehenden Ansprüche, weiterhin umfassend:
ein Führungsblech, das sich unterhalb des Leitblechs befindet und im Wesentlichen entsprechend dem Leitblech gestaltet und parallel zu diesem angeordnet ist, wobei das Führungsblech eine Öffnung aufweist, durch welche eine Kupplung zwischen Rüttelvorrichtung und Leitblech hindurchreicht.

15. Heuschwader (2), nach Anspruch 14, wobei das Leitblech aus einem relativ leichten Material, bevorzugt Kunststoff oder einem Verbundwerkstoff, gefertigt ist und das Führungsblech aus einem relativ schweren Material, bevorzugt einem Metall oder einer Metalllegierung gefertigt ist.
